# EUROPEAN PATENT SPECIFICATION

(11) **EP 0 930 091 B1**
(45) Date of publication and mention of the grant of the patent: **30.06.2004**
(21) Application number: 98917639.1
(22) Date of filing: 23.04.1998
(51) Int. Cl.: B01D 53/70, B01D 53/40, B01D 53/68, B01D 53/50

(54) **METHOD OF TREATING EXHAUST GAS**
METHODE ZUR ABGASBEHANDLUNG
PROCEDE DE TRAITEMENT DES EMANATIONS GAZEUSES

(30) Priority: 25.04.1997 JP 12294697; 25.04.1997 JP 12294797
(43) Date of publication of application: 21.07.1999
(73) Proprietor: JFE Engineering Corporation, Tokyo 100-0005 (JP)
(72) Inventor: HAMAGUCHI, Keizo, NKK Corporation, Tokyo 100-0005 (JP); OSADA, Yo, NKK Corporation, Tokyo 100-0005 (JP); NOTO, Takashi, NKK Corporation, Tokyo 100-0005 (JP); AYUKAWA, Susumu, NKK Corporation, Tokyo 100-0005 (JP); FUJII, Satoshi, NKK Corporation, Tokyo 100-0005 (JP); KURODA, Manabu, NKK Corporation, Tokyo 100-0005 (JP)
(74) Representative: Sajda, Wolf E., Dipl.-Phys.
(86) International application number: PCT/JP1998/001862
(87) International publication number: WO 1998/048924

(56) References cited:
- WO-A-96/16721
- JP-A- 1 212 809
- JP-A- 2 298 316
- JP-A- 5 031 323
- JP-A- 5 285 335
- JP-A- 7 031 847

## Description

### TECHNICAL FIELD

The present invention relates to a method of treating exhaust gases for detoxifying exhaust gases containing hazardous materials and discharged in a combustion process in incineration refuse incineration facilities, combustible waste treatment facilities, and other combustion equipment, as well as exhaust gases containing hazardous materials and discharged in a heating process in metal refining plants and the like. Particularly, the present invention concerns a method of spraying powder reactants at the time of eliminating hazardous materials by using powder reactants including a basic absorbent and an adsorbent. More particularly, the present invention concerns a method of treating exhaust gases for controlling the amount of adsorbent sprayed at the time of eliminating organic halogen compounds such as dioxins, which are hazardous materials contained in exhaust gases, by spraying an adsorbent. Still more particularly, the present invention concerns a method of treating exhaust gases for controlling the amount of absorbent sprayed at the time of eliminating acid components, which are hazardous materials contained in exhaust gases, by spraying a basic absorbent.

### BACKGROUND ART

Exhaust combustion gases discharged when municipal wastes and industrial wastes are subjected to incineration disposal in incinerators or the like, as well as exhaust gases discharged when scraps including flammable deposits are preheated or dissolved in metal refining plants or the like, contain various hazardous materials, including soot and dust, acid gases such as hydrogen chloride, nitrogen oxides, heavy metals such as mercury, and dioxins and their precursors.

(A) As methods of treating exhaust combustion gases containing hazardous materials such as soot and dust, acid gases, mercury, and dioxins that are discharged from incinerators and the like, a number of methods have hitherto been disclosed.

For example, in the method disclosed in JP-A-31323/1993, an adsorbent, such as activated carbon, and a basic absorbent, such as slaked lime, are blown into a flue at an inlet of a dust collector by using separate supplying means without mixing the powdered activated carbon and the slaked lime. The aforementioned activated carbon adsorbs heavy metals such as mercury in the exhaust gases, and also adsorbs hazardous organic chlorine compounds such as dioxin. The activated carbon which adsorbed these hazardous materials is collected by the dust collector such as a bag filter provided in the downstream, and is thereby eliminated from the exhaust gases. In addition, although acid components such as hydrogen chloride are contained in the exhaust combustion gases, these acid components are removed by the aforementioned basic absorbent sprayed into the exhaust gases.

In addition, in JP-A-204432/1995, slaked lime and activated carbon are mixed and stored in the same silo, and a mixture of slaked lime and activated carbon is blown into a flue by a single supplying means.

However, with the former method (JP-A-31323/1993), since slaked lime and activated carbon are supplied to the flue by the separate supplying means, the slaked lime and the powdered activated carbon are not mixed sufficiently in the process of being conveyed through the flue and in the dust collector. Accordingly, since the activated carbon is not dispersed sufficiently uniformly at the filter cloth surface in the filtration and dust collection process using such as the bag filter, the effect of adsorption and removal of mercury and dioxins by the activated carbon tends to become small.

In general, carbon-based powders such as activated carbon are flammable, and if the flammable volatile content is large, there is a risk of inflammation and dust explosion due to the effect of static electricity and the like. In the case of good-quality activated carbon provided with sufficient activation and removal of the volatile matter, the possibility of dust explosion is extremely small, but it cannot be said that the possibilities of inflammation and dust explosion are utterly nil.

In view of this aspect, since activated carbon is not premixed with slaked lime and the like, and the activated carbon is sprayed singly, this method cannot be said to be sufficient because the risk of inflammation and dust explosion in the activated carbon silo and in the spraying process is not reduced sufficiently.

In the latter method (JP-A-204432/1995), slaked lime and powdered activated carbon are mixed in the same silo or mixed in advance before being charged into the silo, the two substances are mixed effectively, but since the mixture is sprayed by a single supplying means, it is impossible to individually adjust the amounts of powdered activated carbon and slaked lime sprayed. Namely, there are problems in that if the amount, of slaked lime supplied for removing acid gases is increased, the amount of activated carbon sprayed increases at the same time, and more activated carbon than is necessary is consumed, and that if, to the contrary, the amount of activated carbon sprayed is increased, the amount of slaked lime supplied increases, and slaked lime is consumed wastefully.

Accordingly, an object of the present invention is to provide a method which makes it possible to appropriately spray powder reactants for treating exhaust gases.

(B) The present situation is such that, among the aforementioned hazardous materials, it has not necessarily been possible to sufficiently reduce organic halogen compounds such as dioxins and their precursors. In recent years, the atmospheric diffusion of highly toxic dioxins produced in incinerators and the like has become a social issue. Further, in 1990 the Ministry of Health and Welfare of Japan came to apply a guideline on such as prevention of occurrence of dioxins to refuse incineration sites, and at present there is a move to further strengthen this guideline.

Methods for reducing hazardous materials contained in the exhaust gases include a method for suppressing their formation and a method for eliminating the hazardous materials formed. The former involves the suppression of formation on the basis of combustion control by such as avoiding incomplete combustion through control of the furnace temperature reaching 700°C to 1000°C and control of air for combustion, as well as the suppression of resynthesis of dioxins due to the sudden cooling of exhaust gases, while the latter involves adsorption and oxidation decomposition using a catalyst as well as adsorption removal using an adsorption. Then, these methods are generally used in combination.

Conventionally, the aforementioned JP-A- 31323/1993 discloses a method in which after cooling exhaust gases to 120°C - 200°C, powdered activated carbon is sprayed to adsorb heavy metals and organic halogen compounds, and a basic absorbent is sprayed on a dry basis to adsorb acid components, subsequently collecting these absorbents together with soot and dust so as to eliminate hazardous materials. The aforementioned JP-A- 204432/1995 a method in which exhaust gases are cooled to 220°C - 230°C, a mixture of slaked lime and activated carbon is sprayed.

However, these methods limit the method of treating exhaust gases and the method of spraying, and the adsorbents such as activated carbon are sprayed in fixed amounts in accordance with degrees of treatment; thus, they are not methods for controlling the amount of adsorbent sprayed.

The publication JP-A-7-031 847 disclosed a method according to the preamble of claim 1. In the conventional method, a slurry of slaked lime is supplied to a reactor and slaked lime and active coke are supplied to a gas duct at its supplying inlet or upstream. Also, it is mentioned in the document that it is possible to provide supplying inlets at two positions in order to supply slaked lime and active coke separately.

### DISCLOSURE OF THE INVENTION

The present invention has been devised to overcome these problems, and has the following features.

First, in accordance with the present invention, the above-described object is attained by a method of treating exhaust gases comprising the features of claim 1.

Further development of the invention are specified in the subclaims.

Since two powder reactants, including a powdered basic absorbent and a powdered adsorbent constituted of a mixture of activated carbon and an auxiliary agent, are used as the powder reactants, it is possible to simultaneously obtain the advantage of making it possible to avoid the possibility of inflammation and dust explosion due to the use of activated carbon alone through the mixture with the auxiliary agent, the advantage of making it possible to adjust the amount of spraying in correspondence with the respective necessary amounts of slaked lime and activated carbon, and the advantage of making it possible to adsorb and remove mercury and dioxins efficiently in the filtration and dust collection process since contact efficiency improves due to uniform dispersion of activated carbon at the cloth surface of the bag filter in the dust collector due to the fact that activated carbon and the auxiliary agent are sufficiently mixed in advance. That is, the risk of dust explosion can be eliminated, a high effect of removing mercury and dioxins can be attained, and wasteful consumption of slaked lime and activated carbon can be suppressed.

Since an auxiliary agent is used to form a mixture with activated carbon, activated carbon is diluted, so that the risk of inflammation and dust explosion due to activated carbon can be reduced. In a case where a powdered basic absorbent such as slaked lime is used as the auxiliary agent, the alkaline material neutralizes acid components in the exhaust gases, so that the exhaust gases can be clarified more effectively. If an exfoliation material such as diatomite is used as the auxiliary agent, it is possible to prevent an increase in the pressure loss of deposited dust on the cloth surface of the bag filter in a later stage. If a powdered catalyst is used as the auxiliary agent, the effect of removing dioxins in the exhaust gases further improves in addition to the effect of activated carbon. By using a plurality of these auxiliary agents, the effects described herein can be obtained synergistically.

A mixture in which activated carbon and the auxiliary agent are mixed in advance such that the proportion by weight of activated carbon becomes 20 to 80% is preferably used as the mixture of activated carbon and an auxiliary agent.

If the mixing proportion of activated carbon is set to less than 20%, when an attempt is made to attain a predetermined amount of activated carbon sprayed, the amount of the overall mixture sprayed is increased, an excessive amount of auxiliary agent such as slaked lime is sprayed, and the auxiliary agent is consumed wastefully, so that it is not preferable. If the mixing proportion of activated carbon is set to more than 80%, the effect of avoiding the risk of inflammation and dust explosion through the dilution of activated carbon by mixture with slaked lime becomes weak, and the risk of inflammation and dust explosion due to the volatile matter contained in activated carbon, static electricity, and the like increases, so that it is not preferable.

As the aforementioned activated carbon, coconut husk-based, peat-based, and charcoal-based activated carbons are available, and any one of them can be used.

In accordance with the above-described first aspect of the invention, since a powdered basic absorbent such as slaked lime and a powdered adsorbent are used as powder reactants, and a mixture of activated carbon and an auxiliary agent is used as the powdered adsorbent, it is possible to simultaneously obtain the advantage of making it possible to avoid the possibility of inflammation and dust explosion due to the use of activated carbon alone through the mixture with the auxiliary agent, the advantage of making it possible to adjust the amount of spraying in correspondence with the respective necessary amounts of slaked lime and activated carbon, and the advantage of making it possible to adsorb and remove mercury and dioxins efficiently in the filtration and dust collection process since contact efficiency improves due to uniform dispersion of activated carbon at the cloth surface of the bag filter in the dust collector due to the fact that activated carbon and the auxiliary agent are sufficiently mixed in advance. That is, the risk of dust explosion can be eliminated, a high effect of removing mercury and dioxins can be attained, and wasteful consumption of slaked lime and activated carbon can be suppressed.

### BRIEF DESCRIPTION OF THE DRAWINGS

Fig. 1 is a diagram illustrating a form in which the present invention is applied to a refuse incineration treatment facility as an embodiment of the present invention;
Fig. 2 is a diagram illustrating one example of a method of spraying an adsorbent and slaked lime by a conventional method, for the sake of comparison with the present invention.
Fig. 3 is a diagram illustrating the relationship between the amount of powdered activated carbon sprayed and the dioxin concentration, and gives a comparison between an example of the present invention and a comparative example.

### BEST MODE FOR CARRYING OUT THE INVENTION

Hereafter, referring to the accompanying drawings, a description will be given of an embodiment of the present invention.

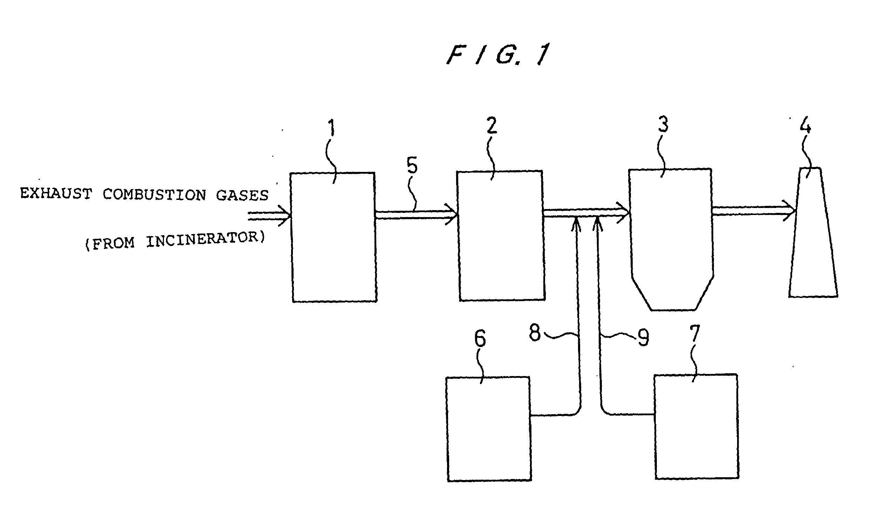

Fig. 1 shows an embodiment in a case where the method of spraying slaked lime and an adsorbent is adopted in a refuse incineration disposal facility as a first embodiment for attaining the first object of the present invention.

In Fig. 1, reference numeral 1 denotes a boiler; 2, a temperature reducing tower; 3, a filter-type dust collector such as a bag filter; and 4, a stack, and they are consecutively connected by flues 5.

In the present invention, there are provided a slaked-lime supplying apparatus 6 for supplying slaked lime as a powdered basic absorbent and a mixture supplying apparatus 7 for supplying a mixture of activated carbon as a powdered adsorbent and an auxiliary agent. The slaked-lime supplying apparatus 6 and the mixture supplying apparatus 7 are connected to the flue 5 between the temperature reducing tower 2 and the filter-type dust collector 3 by means of conveying tubes 8 and 9 serving as separate conveying passages.

In the apparatus of the present invention, the exhaust combustion gases discharged from an incinerator (not shown) are introduced into the boiler 1, and their temperature is lowered to 250 to 400°C by the recovery of heat. Subsequently, the temperature of the exhaust gases is lowered to 120 - 250°C suitable for the bag filter 3, and the exhaust gases are introduced to the bag filter 3. Meanwhile, the slaked lime and the mixture of activated carbon and the auxiliary agent which are respectively supplied from the slaked-lime supplying apparatus 6 and the mixture supplying apparatus 7 are sprayed into the flue 5 at an inlet of the bag filter 3 through the conveying tubes 8 and 9, respectively, and are introduced into the bag filter 3.

The exhaust gases containing hazardous materials, slaked lime, and the mixture of activated carbon and the auxiliary agent which are introduced into the bag filter 3 are sufficiently brought into contact with each other in the filtration and dust collection process in the flue 5 at the inlet of the bag filter 3 and at the cloth surface of the bag filter 3, and mercury and dioxins contained in the exhaust gases are removed by the adsorbing action of activated carbon. At this time, since acid gases such as HCl and SOx are eliminated by slaked lime, the exhaust gases are clarified sufficiently by the bag filter 3. The clarified exhaust gases after emerging from the bag filter 3 are emitted to the atmosphere from the stack 4.

A more detailed description will be given of the various parts of the apparatus of this embodiment described above.

The temperature for treating the exhaust gases by the bag filter 3 should preferably be a low temperature at 200°C or less in order to enhance the efficiency for removal of acid gases and the effect of adsorption of mercury and dioxins. However, if this temperature is set to 150°C or less, it approaches the acid dew point, and corrosion of the apparatus unfavorably occurs, so that it is preferable to lower the temperature within the range in which the corrosion or the like of the apparatus does not occur.

Another heat recovering means may be used instead of the temperature reducing tower 2 or the temperature reducing tower 2 may be omitted if the exhaust-gas temperature suitable for the bag filter 3 can be attained.

The position where slaked lime and the mixture of activated carbon and the auxiliary agent are sprayed, i.e., the position of connection of the conveying tubes 8 and 9, may be at any position insofar as the sprayed powders are deposited on the filter cloth, and the position may be in the flue 5 at the inlet of the basic absorbent 3, may be located directly at the basic absorbent 3 without the intervention of the flue 5, or may be in the flue 5 at the inlet of the temperature reducing tower 2. However, in the case where the conveying tubes 8 and 9 are connected to the flue 5 at the inlet of the temperature reducing tower, such a connection is relatively unfavorable since there are cases where the powder mixture of slaked lime and the adsorbent partially drops and is lost due to the inertial force. To reduce the loss of the aforementioned mixture until reaching the basic absorbent 3, it is preferable to connect the conveying tubes 8 and 9 to the flue 5 immediately before the basic absorbent 3 or to an upper portion of the basic absorbent 3.

The slaked-lime supplying apparatus 6 and the activated carbon/auxiliary agent mixture supplying apparatus 7 are each provided with a silo for storing the powder, a fixed-amount supplying machine such as a table feeder for dispensing the powder in a fixed amount, a blower or an air compressor for producing air for pneumatic conveyance, and a conveying tube for pneumatically conveying the powder. However, the slaked-lime supplying apparatus 6 and the mixture supplying apparatus 7 may be of any types insofar as requirements for the powder such as slaked lime to be easily sprayed into the exhaust gases can be satisfied,

As for the setting of the amount of spraying by the slaked-lime supplying apparatus 6, it is possible to cite, among others, a method in which the spraying amount is set in correspondence with the concentrations of acid gases prior to treatment, and a method in which the spraying amount is set appropriately so that the concentrations of acid gases are lowered to predetermined levels or less by detecting the concentrations of acid gases in the exhaust gases after treatment. However, the setting method and the method of controlling the concentrations in exhaust gases are not particularly restricted.

As for the setting of the amount of spraying by the activated carbon/auxiliary agent mixture supplying apparatus 7, it is possible to cite, among others, a method in which the spraying amount is set in correspondence with the concentrations prior to treatment which are estimated from the quality of refuse and the like, and a method in which the spraying amount is set appropriately so that the concentrations are lowered to predetermined levels or less by detecting the mercury concentration and the dioxin concentration in exhaust gases after treatment or the concentrations of indicator substances substituting them. However, the setting method and the method of controlling the concentrations of exhaust gases are not particularly restricted. The amount of activated carbon cannot be particularly limited since it depends on the concentrations of hazardous materials and the degree of detoxification; however, in the case of a refuse incineration facility, it is preferable to spray the mixture of activated carbon and the auxiliary agent at a rate of 0.01 to 1.0 g/Nm³ with respect to the exhaust gases. At this time, the weight concentration of activated carbon in the collected dust containing soot and slaked lime, which is collected by the basic absorbent 3, is approximately 0.2 to 20%.

The slaked lime which is supplied by the slaked-lime supplying apparatus 6 removes acid components in the exhaust gases by neutralizing them, so that another powdered alkaline material such as calcium carbonate may be alternatively used.

As for the activated carbon supplied by the activated carbon/auxiliary agent mixture supplying apparatus 7, the performance of adsorbing dioxins can be similarly obtained even if, other than activated carbon, a carbon-based porous powder having a large specific surface area of 100 m²/g or more is alternatively used. However, by taking into safety such as the avoidance of dust explosion during storage in the silo, the carbon-based powder should preferably be one which has been manufactured by incorporating the process of sufficiently volatilizing the volatile content and whose ignition point is sufficiently high.

As the auxiliary agents which are mixed with activated carbon, an alkaline material such as slaked lime, an exfoliation material such as diatomite, and a powdered catalyst are used, and are preferably mixed such that the mixing proportion of activated carbon becomes 20 to 80%. If the proportion by weight of activated carbon is set to less than 20%, when a necessary amount of activated carbon sprayed is attained, an excessive amount of auxiliary agent such as slaked lime is concurrently sprayed, and the auxiliary agent is consumed wastefully, so that it is not preferable. If the proportion by weight of activated carbon is set to more than 80%, the effect of avoiding the risk of inflammation and dust explosion through the dilution of activated carbon by mixture with slaked lime becomes weak, and the risk of inflammation and dust explosion due to the volatile matter contained in activated carbon, static electricity, and the like increases, so that it is not preferable.

In a case where a powdered basic absorbent such as slaked lime is used as the auxiliary agent to be mixed, since the alkaline material neutralizes acid components in the exhaust gases, so that the exhaust gases can be clarified more effectively. If an exfoliation material such as diatomite is used as the auxiliary agent, it is possible to prevent an increase in the pressure loss of deposited dust on the cloth surface of the bag filter 3 in the later stage. If a powdered catalyst is used as the auxiliary agent, the effect of removing dioxins in the exhaust gases further improves in addition to the effect of activated carbon. By using a plurality of these auxiliary agents, the effects described herein can be obtained synergistically. In practice, the auxiliary agents may be selected and their mixing ratio may be determined by taking these effects into account. For example, it is possible to cite a method in which the mixing ratio during the normal operation is set to 60% for slaked lime and 40% for activated carbon, diatomite is further mixed in at the time of starting up and shutting down, and a catalyst is mixed in when an even higher level of dioxin removal is aimed at.

As for the method of mixing activated carbon and auxiliary agents, there is a method in which after the mixing ratio is determined in advance, activated carbon and the auxiliary agents are agitated and mixed in a lorry tank at the time of charging the powders in a lorry or the like, and the mixture is then charged into the powder silo. However, it is possible to adopt any method insofar as the method allows the plurality of powders to be mixed sufficiently.

To give a more detailed description of the hazardous materials which are removed in the present invention, the hazardous materials are not confined to the four kinds which have been described above, and heavy metals such as lead and cadmium in addition to mercury are also adsorbed and removed simultaneously. Further, in addition to the dioxins, it is possible to remove aromatic organic chloride compounds such a chlorobenzene and chlorlophenol which are precursors of the dioxins, as well as organic chlorine compounds related to the synthesis or resynthesis of the dioxins.

Here, the dioxins is a general term for polychlorinated dibenzo-p-dioxins and polychlorinated dibenzofurans, concerning which a guideline for refuse incineration plants has been designated through their toxicity equivalent values by the Ministry of Health and Welfare of Japan.

### <Example 1>

An example will be shown which demonstrates the effect of the present invention obtained by adopting the method of spraying slaked lime and an adsorbent in accordance with the present invention in a refuse incineration disposal facility.

Table 1 is a table in which a comparison is made on the effect of removing various hazardous materials in the example in which the present invention is carried out and a comparative example according to the conventional method.

Example 1 shows the result in which the method is carried out by the arrangement of the apparatus shown in Fig. 1. As the operating conditions of the exhaust gas treatment facility, the boiler outlet exhaust gas temperature was set to 250°C, the bag filter inlet temperature, i.e., the treatment temperature, was set to 180°C, the amount of exhaust gases treated was set to 40,000 Nm³/h, slaked lime was used as the auxiliary agent, and the mixing proportion of activated carbon was set to 40%.

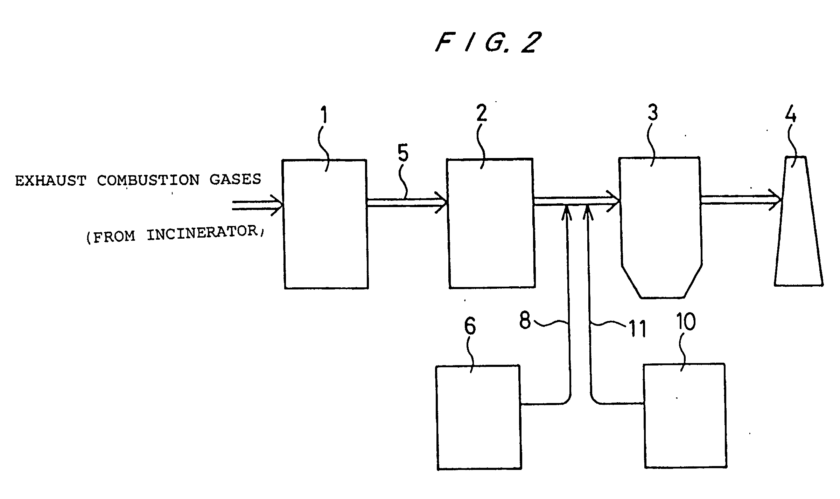

Comparative Example 1 shows the result in which although slaked lime supply was the same as the example as shown in Fig. 2, but the supply of activated carbon was not mixed with the auxiliary agent, and adsorbent was singly supplied through a conveying tube 11 by means of an activated-carbon supplying apparatus 10. The operating conditions of the exhaust gas treatment facility were set to be the same as Example 1.

The results of Table 1 show that it was possible to remove acid gases represented by soot and HCl at high levels by the bag filter in both Example 1 and Comparative Example 1. Meanwhile, as for mercury and dioxins, it is shown that Example 1 in which the present invention was carried out attained removal at higher levels than Comparative Example 1. Namely, the results of Table 1 show that since the mixture of activated carbon and slaked lime was mixed well in advance by carrying out the method of spraying powder reactants in accordance with the present invention, activated carbon was dispersed uniformly on the cloth surface of the bag filter, and that it was possible to attain adsorption and removal of mercury and dioxins at high levels by means of activated carbon in the filtration and dust collection process.

**Table 1**

| **Comparison Between Example 1 and Comparative Example 1** | | | |
|---|---|---|---|
| Item | | Example 1 | Comparative Example 1 |
| Amount of activated carbon sprayed [g/Nm³] | | 0.1 | |

| Before treatment: | | | |
|---|---|---|---|
| soot and dust | [g/Nm³] | 2.1 | 1.8 |
| HCl | [ppm] | 600 | 580 |
| mercury | [mg/Nm³] | 0.22 | 0.20 |
| dioxins | [ng/Nm³] | 2.1 | 1.9 |

| After treatment: | | | |
|---|---|---|---|
| soot and dust | [g/Nm³] | 0.0018 | 0.0017 |
| HCl | [ppm] | 47 | 49 |
| mercury | [mg/Nm³] | 0.015 | 0.025 |
| dioxins | [ng/Nm³] | 0.14 | 0.25 |

| Removal rate: | | | |
|---|---|---|---|
| soot and dust | [%] | 99.9 | 99.9 |
| HCl | [%] | 92.2 | 91.6 |
| mercury | [%] | 93.2 | 87.5 |
| dioxins | [%] | 93.3 | 86.8 |
| N.B.: Concentrations before treatment are those of exhaust gases at the boiler outlet. | | | |
| Concentrations before treatment are those of exhaust gases at the boiler outlet. | | | |
| The concentration of dioxins is a toxicity equivalent concentration. | | | |

Further, after changing the amount of powdered activated carbon sprayed, an examination was conducted with respect to the concentration of dioxins at the outlet of the bag filter (concentration after treatment).

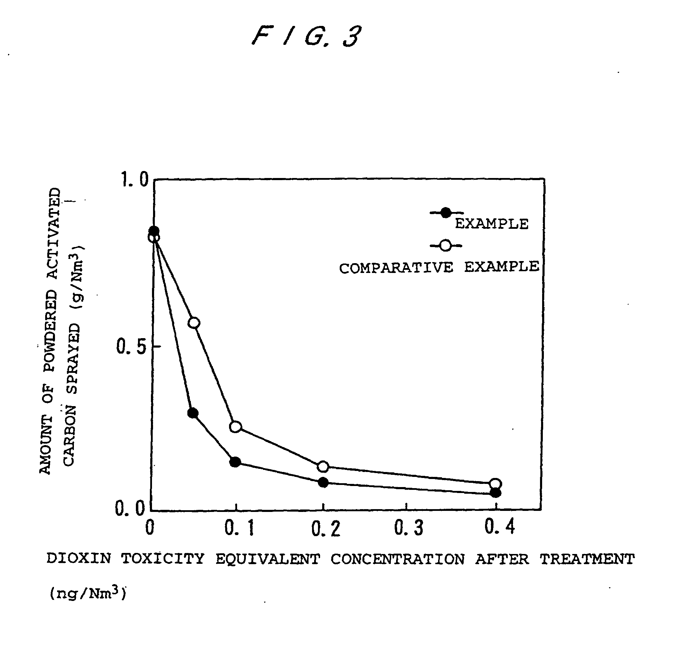

Fig. 3 is a diagram in which Example 1 and Comparative Example 1 are compared with respect to the dioxin concentration at the outlet of the bag filter by changing the amount of powdered activated carbon sprayed.

The results of Fig. 3 show that if the amount of powdered activated carbon sprayed is increased, the dioxin concentration at the outlet of the bag filter decreases. It is shown that, as compared with Comparative Example 1 in which the present invention was not carried out, Example 1 in which the present invention was carried out is able to further lower the dioxin concentration, so that the adsorption and removal performance is high, and that particularly when the amount of spraying is small at 0.1 g/Nm³ or less, Example 1 in accordance with the present invention excels. Incidentally, it was possible to confirm a similar removal effect with respect to mercury as well.

### <Example 2>

Next, a trail calculation was made with respect to the amounts of slaked lime and adsorbent consumed, and a comparison with the conventional method was made.

Table 2 is a table in which the amounts of slaked lime and adsorbent consumed are compared between Example 2 in which the present invention was carried out and Comparative Examples 2 and 3 in accordance with the conventional method.

The conditions of Example 2 in which the present invention was carried out were the same as those of Example 1, and the conditions of Comparative Example 2 were the same as those of Comparative Example 1. Comparative Example 3 is a comparative example in which a powder mixture in which slaked lime and the adsorbent were mixed in advance was sprayed by a single supplying apparatus, and the mixing proportion of activated carbon was 5% by weight.

As for these three conditions, the operating conditions of the exhaust gas treatment facility were unified by the conditions shown in Example 1 for comparison's sake, and the amounts of slaked lime and adsorbent charged were respectively controlled for 48 hours in such a manner that the HCl concentration and the mercury concentration at the outlet of the bag filter became fixed values or less. Activated carbon was used as the adsorbent in all cases.

Among the results of Table 2, the results of Comparative Example 2 are those of the case in which activated carbon and the auxiliary agent were not mixed and were separately sprayed, and although the amount of slaked lime consumed for removing acid gases was the same as in Example 2 of the present invention, since miscibility of activated carbon was inferior, it was necessary to increase the amount of activated carbon sprayed. The results of Comparative Example 3 are those of the case in which a powder mixture in which activated carbon was mixed in advance was sprayed by a single supplying apparatus, the amount of activated carbon or slaked lime sprayed increased to control the concentrations to predetermined outlet concentrations, so that activated carbon and slaked lime were consumed wastefully. That is, in accordance with the present invention, the amount of consumption can be reduced when attaining the predetermined removal performance, and in terms of the total cost Example 2 was able to attain a cost reduction by approximately 17% in comparison with Comparative Example 2 and approximately 29% in comparison with Comparative Example 3.

**Table 2**

| **Comparison of Amounts of Slaked Lime and Activated Carbon Consumed** | | | | |
|---|---|---|---|---|
| | | Example 2 | Comparative Example 2 | Comparative Example 3 |
| HCl control concentration | [ppm] | 50 | | |
| HCl actual concentration | [ppm] | 35 - 55 | 35 - 55 | 20 - 55 |
| Mercury control concentration | [mg/Nm³] | 0.05 | | |
| Mercury actual concentration | [mg/Nm³] | 0.01 - 0.06 | 0.01 - 0.06 | 0.01 - 0.08 |
| Amount of Slaked lime sprayed | [g/Nm³] | 1.2 - 2.5 | 1.2 - 2.5 | 1.5 - 3.5 |
| Amount of activated carbon sprayed | [g/Nm³] | 0.04 - 0.15 | 0.05 - 0.20 | 0.08 - 0.18 |
| Amount of Slaked lime consumed | [-] | 1 | | 1.4 |
| Amount of activated carbon consumed | [-] | 1 | 1.5 | 1.4 |
| Total cost | [-] | 1 | 1.2 | 1.4 |
| N.B.: Values in the latter portion of the table are relative values in a case where the value for Example 1 is set as 1. | | | | |
| The total cost is a value in a case where the unit price of the adsorbent is set to 10 times the slaked lime. | | | | |
| The actual concentrations are one-hour average measured values obtained at the outlet of the bag filter. | | | | |

## Claims

1. A method of treating exhaust gases, wherein a powdered basic absorbent (6) and a powdered adsorbent (7) including activated carbon as powder reactants are sprayed at respective inlets (8; 9, 11) into exhaust gases, so as to eliminate hazardous materials in the exhaust gases emitted in conjunction with incineration or heating,
**characterized in that**
an auxiliary agent is mixed to the powdered adsorbent (7),
**in that** at least one of an exfoliation material such as diatomite and dolomite powder, and a powdered catalyst is used as the auxiliary agent,
and **in that** means (7) for supplying the mixture and means (6) for supplying the powdered basic absorbent (6) are installed separately and adapted to control the separately supplied quantities of the mixture of activated carbon and the auxiliary agent as well as that of the powdered basic absorbent.

2. The method according to claim 1,
wherein at least one of slaked lime, calcium carbonate, quick lime, and dolomite is used as the powdered basic absorbent (6).

3. The method according to claim 1 or 2,
wherein a mixture (7), in which activated carbon and the auxiliary agent are mixed in advance such that the proportion by weight of activated carbon becomes 20 % to 80 %, is used as the mixture of activated carbon and an auxiliary agent.

## Patentansprüche

1. Verfahren zur Behandlung von Abgasen,
wobei ein pulverförmiges Grundabsorptionsmittel (6) und ein pulverförmiges Adsorptionsmittel (7) einschließlich Aktivkohle als pulverförmige Reaktanten an jeweiligen Einlässen (8; 9, 11) in Abgase gesprüht werden, um gefährliche Materialien aus den Abgasen zu entfernen, welche in Verbindung mit der Verbrennung oder Erhitzung emittiert werden,
**dadurch gekennzeichnet,**
**daß** ein Zusatzmittel zu dem pulverförmigen Adsorptionsmittel (7) gemischt wird,
**daß** zumindest eine Substanz aus einem Exfoliationsmaterial, wie z. B. Diatomitpulver und Dolomitpulver, und einem pulverförmigen Katalysator als Zusatzmittel verwendet wird,
und **daß** eine Einrichtung (7) zur Zuführung der Mischung und eine Einrichtung (6) zur Zuführung des pulverförmigen Grundabsorptionsmittels (6) separat installiert und dafür ausgelegt werden, die separat zugeführten Mengen von der Mischung aus Aktivkohle und dem Zusatzmittel sowie von pulverförmigem Grundabsorptionsmittel zu steuern.

2. Verfahren nach Anspruch 1,
wobei zumindest eine Substanz von Löschkalk, Calziumcarbonat, Branntkalk und Dolomit als pulverförmiges Grundabsorptionsmittel (6) verwendet wird.

3. Verfahren nach Anspruch 1 oder 2,
wobei eine Mischung (7), in welcher Aktivkohle und das Zusatzmittel im vorhinein gemischt werden, so daß der Gewichtsanteil von Aktivkohle 20 % bis 80% beträgt, als Mischung aus Aktivkohle und Zusatzmittel verwendet wird.

## Revendications

1. Procédé de traitement de gaz d'échappement, où un absorbant basique réduit en poudre (6) et un adsorbant réduit en poudre (7) comprenant du charbon actif en tant que réactifs en poudre sont projetés à des entrées respectives (8 ; 9, 11) dans des gaz d'échappement, de manière à éliminer des matériaux dangereux dans les gaz d'échappement émis en association avec une incinération ou un chauffage,
**caractérisé en ce que**
un agent auxiliaire est mélangé à l'adsorbant réduit en poudre (7),
**en ce qu'**au moins l'un parmi un matériau d'exfoliation, tel que de la diatomite et de la poudre de dolomite, et un catalyseur réduit en poudre est utilisé comme agent auxiliaire,
et **en ce que** des moyens (7) pour délivrer le mélange et des moyens (6) pour délivrer l'absorbant basique réduit en poudre (6) sont installés séparément et adaptés pour commander les quantités délivrées séparément du mélange de charbon actif et d'agent auxiliaire, de même que celle de l'absorbant basique réduit en poudre.

2. Procédé selon la revendication 1,
dans lequel au moins l'un parmi de la chaux éteinte, du carbonate de calcium, de la chaux vive et de la dolomite est utilisé comme absorbant basique réduit en poudre (6).

3. Procédé selon la revendication 1 ou 2,
dans lequel un mélange (7), dans lequel du charbon actif et l'agent auxiliaire sont mélangés à l'avance de telle sorte que la proportion en poids du charbon actif devient de 20 % à 80 %, est utilisé comme mélange de charbon actif et d'un agent auxiliaire.
